# EUROPEAN PATENT SPECIFICATION

(11) **EP 2 337 106 B1**
(45) Date of publication and mention of the grant of the patent: **19.03.2014**
(21) Application number: 10251774.5
(22) Date of filing: 08.10.2010
(51) Int. Cl.: H01M 2/02

(54) **Rechargeable battery**
Wiederaufladbare Batterie
Batterie rechargeable

(30) Priority: 13.10.2009 US 251243 P; 20.08.2010 US 860692
(43) Date of publication of application: 22.06.2011
(73) Proprietor: Samsung SDI Co., Ltd., Yongin-si, Gyeonggi-do (KR)
(72) Inventor: Kim, Jun-Sik, Yongin-si, Gyeonggi-do (KR); Hwang, Po-Jung, Yongin-si, Gyeonggi-do (KR); Lee, Seung-Jae, Yongin-si, Gyeonggi-do (KR); Kang, Yoo-Myung, Yongin-si, Gyeonggi-do (KR); Kim, Sung-Soo, Yongin-si, Gyeonggi-do (KR)
(74) Representative: Mounteney, Simon James

(56) References cited:
- WO-A1-2008/023903
- US-A1- 2004 033 416

## Description

### BACKGROUND OF THE INVENTION

### (a) Field of the Invention

The present invention relates to a rechargeable battery. More particularly, the present invention relates to a structure of a case that houses an electrode group.

### (b) Description of the Related Art

A rechargeable battery includes an electrode group that includes an positive electrode, a separator, and a negative electrode, a case that houses the electrode group, and an electrode terminal that is connected to the electrode group and that is drawn out to the outside of the case. The case can be formed with a laminate sheet in which a metal layer and a resin layer are bonded, and a rechargeable battery having the case is referred to as a pouch type battery.

WO 2008/023903 discloses such a typical pouch-type battery.

A common pouch type battery is formed by fixing an positive electrode terminal and a negative electrode terminal by welding to an positive electrode uncoated portion and a negative electrode uncoated portion, respectively, of the electrode group, housing the entire electrode group in which an electrolyte solution is impregnated and a part of the positive electrode terminal and the negative electrode terminal in the internal space of the case, and sealing and bonding edges of the upper case and the lower case by thermal bonding.

However, in the above-described structure, a welding portion of the electrode group and the electrode terminal, a sealing portion of the upper case and the lower case, and a drawn-out portion of the electrode terminal are sequentially positioned at the outside of the electrode group. Therefore, because a portion that does not contribute to an actual battery reaction in the entire rechargeable battery occupies a large area, the entire volume is expanded and thus this arrangement is disadvantageous to form a rechargeable battery having a both high capacity and a compact size.

Moreover, when thermal bonding the upper case and the lower case, the upper case is sealed to the lower case by deep drawing the upper case. In this situation, because the edge of the upper case becomes weak by the deep drawing, the case can be easily damaged by an external impact, and thus reliability of the rechargeable battery is deteriorated.

The above information disclosed in this Background section is only for enhancement of understanding of the background of the invention and therefore it may contain information that does not form the prior art that is already known in this country to a person of ordinary skill in the art.

### SUMMARY OF THE INVENTION

Some embodiments of the present invention provide a rechargeable battery having advantages of having high capacity and a compact size by reducing an area of a portion that does not contribute to an actual battery reaction at the outside of an electrode group.

Some embodiments of the present invention provide a rechargeable battery having advantages of increased reliability and structural stability by increasing durability of a case through omitting a deep drawing process of an upper case.

The present invention provides a rechargeable battery according to claim 1.

The electrode group may include a central portion at which the separator is positioned, an positive electrode uncoated portion that is positioned at one end portion of the central portion, and a negative electrode uncoated portion, that is positioned at an opposite end portion of the central portion, wherein the positive electrode uncoated portion and the negative electrode uncoated portion may include a curved portion and a current collecting portion, respectively.

The positive electrode case and the negative electrode case may respectively include a first receiving portion that encloses an entire curved portion and a part of the central portion toward the curved portion, and a second receiving portion that is positioned at the outside of the first receiving portion and that encloses the current collecting portion. The positive electrode terminal may be positioned at the outside of the second receiving portion of the positive electrode case, and the negative electrode terminal may be positioned at the outside of the second receiving portion of the negative electrode case.

The central case may enclose an entire central portion of the electrode group and a part of the first receiving portion, and may bond to the first receiving portion by thermal bonding. The first receiving portion may include a linear portion opposite to the central portion and an inclined portion that is connected to the linear portion and that covers a curved portion, and the central case and the first receiving portion may be bonded at the linear portion.

The second receiving portion may form an internal space into which the current collecting portion is inserted, and the current collecting portion may be fixed to the second receiving portion by welding. The second receiving portion may form at least one recess portion, and the current collecting portion and the second receiving portion may be fixed at the recess portion.

Alternatively, the second receiving portion may form an internal space into which the current collecting portion is inserted, and the rechargeable battery may further include a conductive fastening member that penetrates through the second receiving portion and the current collector.

The second receiving portion may form at least one opening that exposes the current collecting portion while being orthogonal to the first receiving portion, and the current collecting portion and the second receiving portion may be fixed by welding through the opening. The central case may enclose the first receiving portion and the second receiving portion, and may be bonded to the second receiving portion by thermal bonding.

The positive electrode case and the negative electrode case may be made of a metal, and the central case may be formed with a laminate sheet.

In some embodiments, a plurality of positive electrode layers, negative electrode layers and separators may be provided.

Preferred features of this aspect are found in claims 2 to 15. In addition, the first receiving portion of the positive electrode case and/or the negative electrode case may have a greater thickness than the central case. Furthermore, the positive electrode case and/or the negative electrode case may have a greater thickness than the central case.

### BRIEF DESCRIPTION OF THE DRAWINGS

FIG. 1 is a perspective view of a rechargeable battery according to a first embodiment of the present invention.
FIG. 2 is an exploded perspective view of the rechargeable battery that is shown in FIG. 1.
FIG. 3 is a cross-sectional view of the rechargeable battery taken along line I-I of FIG. 1.
FIG. 4 is a cross-sectional view of a rechargeable battery according to a second embodiment of the present invention.
FIG. 5 is a cross-sectional view of a rechargeable battery according to a third embodiment of the present invention.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

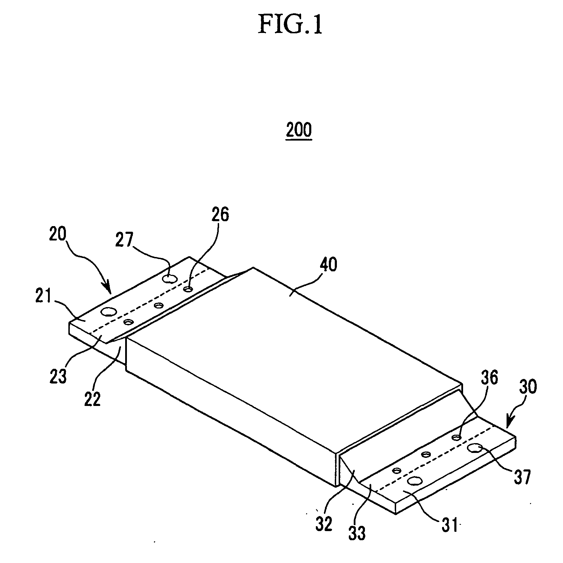

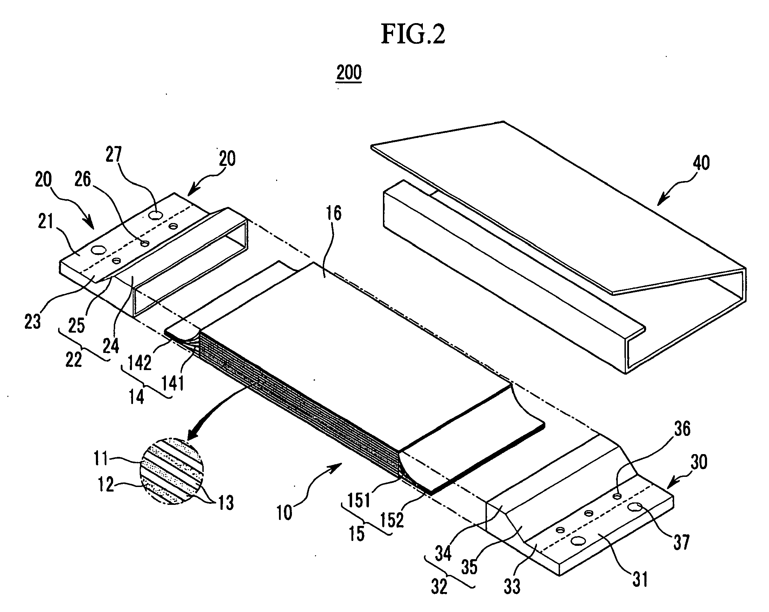

FIG. 1 is a perspective view of a rechargeable battery according to a first embodiment of the present invention, and FIG. 2 is an exploded perspective view of the rechargeable battery that is shown in FIG. 1.

Referring to FIGS. 1 and 2, a rechargeable battery 200 according to the first embodiment includes an electrode group 10, and a positive electrode case 20, a negative electrode case 30, and a central case 40 that divide the electrode group 10 into three areas and that house the electrode group 10. The positive electrode case 20 and the negative electrode case 30 enclose one end portion and the opposite end portion of the electrode group 10, respectively, and the central case 40 encloses the entire central portion of the electrode group 10 and a part of the positive electrode case 20 and the negative electrode case 30 in this embodiment.

In this embodiment, the electrode group 10 is formed by winding in a jelly roll form. In other embodiments, the electrode group 10 is stacked by folding in a zigzag method, or is formed in a stacked form of an positive electrode, a negative electrode, and a separator that are formed in a single plate. FIG. 2 illustrates a stacked electrode group. In the electrode group 10, the positive electrode 11 and the negative electrode 12 are alternately repeatedly stacked with a separator 13 interposed therebetween. The separator 13 has a smaller width than the positive electrode 11 and the negative electrode 12, and is disposed at a predetermined distance from edges of the positive electrode 11 and the negative electrode 12 in this embodiment.

Thereby, a portion of the positive electrode 11 is exposed to the outside of the separator 13 at one end portion of the electrode group 10, and a portion of the negative electrode 12 is exposed to the outside of the separator 13 at the other end portion of the electrode group 10. The exposed portion of the positive electrode 11 is an positive electrode uncoated portion 14 in which an positive electrode active material is not coated in an positive electrode current collector, and a portion of the exposed negative electrode 12 is a negative electrode uncoated portion 15 in which a negative electrode active material is not coated in a negative electrode current collector.

Therefore, the electrode groups 10 and 110 are divided into a central portion 16 at which the separator 13 is positioned, the positive electrode uncoated portion 14 that is positioned at a one end portion of the central portion 16, and the negative electrode uncoated portion 15 that is positioned at an opposite end portion of the central portion 16.

Edges of the positive electrode uncoated portion 14 and the negative electrode uncoated portion 15, respectively, are pressed so as closely contact each other and are bonded by a method such as welding. For convenience, respective portions that are disposed toward one point in the positive electrode uncoated portion 14 and the negative electrode uncoated portion 15 can be referred to as curve portions 141 and 151, and respective bonded regions can be referred to as an positive electrode current collecting portion 142 and a negative electrode current collecting portion 152.

The positive electrode current collecting portion 142 and the negative electrode current collecting portion 152 are positioned at the center of the electrode group 10 in a thickness direction of the electrode group 10, or are positioned to one side of the electrode group 10 in a thickness direction of the electrode group 10. FIG. 2 illustrates the second case.

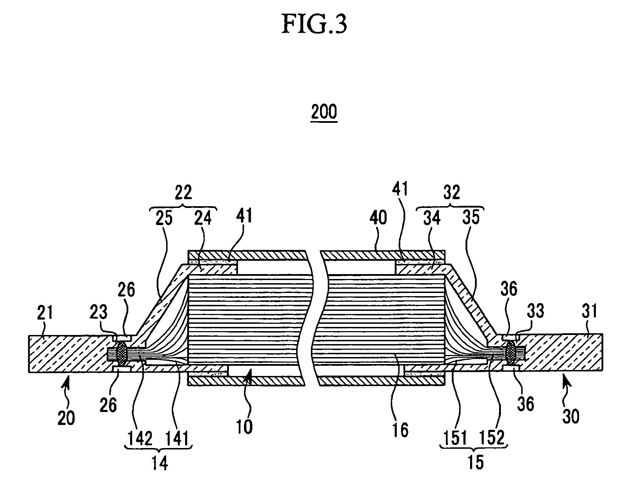

FIG. 3 is a cross-sectional view of the rechargeable battery taken along line I-I of FIG. 1.

Referring to FIGS. 1 and 3, the positive electrode case 20 is coupled to the positive electrode current collecting portion 142 to be electrically connected thereto, and is integrally formed with a positive electrode terminal 21 that is protruded to the outside. The negative electrode case 30 is coupled to the negative electrode current collecting portion 152 to be electrically connected thereto, and is integrally formed with a negative electrode terminal 31 that is protruded to the outside. The positive electrode case 20 and the negative electrode case 30 are each formed with a hard metal having high electrical conductivity.

The positive electrode case 20 includes a first receiving portion 22 that encloses the curve portion 141 and a part of a central portion 16 toward the curve portion 141, a second receiving portion 23 that is positioned at the outside of the first receiving portion 22 and that encloses the positive electrode current collecting portion 142, and the positive electrode terminal 21 that is positioned at the outside of the second receiving portion 23. The first receiving portion 22, the second receiving portion 23, and the positive electrode terminal 21 are integrally connected.

The first receiving portion 22 is formed in an approximately rectangular parallelepiped shape having one opened side surface, and a side surface thereof includes a linear portion 24 that is opposite to the central portion 16 and an inclined portion 25 that covers the curve portion 141.

When the positive electrode current collecting portion 142 is positioned at the center of the electrode group 10 in a thickness direction of the electrode group 10, each of the inclined portions 25 is positioned at an upper part and a lower part of the curve portion 141. Alternatively, when the positive electrode current collecting portion 142 is positioned at one side in a thickness direction of the electrode group 10, one inclined portion 25 is positioned at the outside of the curve portion 141. FIG. 2 illustrates the second case.

The second receiving portion 23 forms an internal space into which the positive electrode current collecting portion 142 is inserted. The positive electrode current collecting portion 142 is fixed to the second receiving portion 23 by welding. For this purpose, the second receiving portion 23 has at least one recess portion 26 and thus partially reduces a thickness thereof, and the second receiving portion 23 and the positive electrode current collecting portion 142 are fixed by spot welding at the recess portion 26. Two recess portions 26 are formed symmetrical to each other at an upper surface and a lower surface of the second receiving portion 23.

Therefore, the positive electrode case 20 including the positive electrode terminal 21 is electrically connected to the positive electrode 11 by coupling of the second receiving portion 23 and the positive electrode current collecting portion 142. In this way, the positive electrode case 20 complexly performs a function as an input and output terminal and a function as a casing structure.

The negative electrode case 30 has the same shape as that of the positive electrode case 20 in this embodiment. However, in other embodiments, the negative electrode case 30 may have a different shape to that of the positive electrode case 20. The negative electrode case 30 has a second receiving portion 33 and a negative electrode current collecting portion 152 which are integrally fixed by welding in this embodiment. Therefore, the negative electrode case 30 including the negative electrode terminal 31 is electrically connected to the negative electrode 12. In FIG. 3, reference numeral 32 indicates a first receiving portion of the negative electrode case 30, and reference numerals 34 and 35 indicate a linear portion and an inclined portion, respectively, of the first receiving portion 32. Reference numeral 36 indicates a recess portion of the second receiving portion 33.

The central case 40 encloses the entire central portion 16 of the electrode group 10 and portions of the first receiving portions 22 and 32 of the positive electrode case 20 and the negative electrode case 30. In this embodiment, the central case 40 is bonded to the positive electrode case 20 and the negative electrode case 30 to be fixed to the cases. The central case 40 can be formed with a laminate sheet in which a metal layer and a resin layer are bonded by an adhesive layer.

The central case 40 is bonded to an outer surface of the linear portions 24 and 34 of the positive electrode case 20 and the negative electrode case 30 by thermal bonding in this embodiment. In FIG. 3, reference numeral 41 indicates a sealing portion of the positive electrode case 20 and the central case 40 and a sealing portion of the negative electrode case 30 and the central case 40.

Therefore, in this embodiment the sealing portion 41 of the positive electrode case 20 and the central case 40 corresponds to the central portion 16 of the electrode group 10, and is positioned at the inside of a bonding portion of the positive electrode current collecting portion 142 and the second receiving portion 23. The sealing portion 41 of the negative electrode case 30 and the central case 40 also corresponds to the central portion 16 of the electrode group 10, and is positioned at the inside of a bonding portion of the negative electrode current collecting portion 152 and the second receiving portion 33.

In the rechargeable battery 200 of the above-described structure of this embodiment, the sealing portion 41 of the cases 20, 30, and 40 is positioned at the inside of the positive electrode current collecting portion 142 and the negative electrode current collecting portion 152, and the positive electrode terminal 21 and the negative electrode terminal 31 are respectively positioned at the outside of the positive electrode current collecting portion 142 and the negative electrode current collecting portion 152 and thus an outer portion width of the electrode group 10 that does not contribute to an actual battery reaction of the entire rechargeable battery 200 can be effectively reduced.

Therefore, by increasing battery capacity by increasing a width of the electrode group 10 to the size of the rechargeable battery, or by decreasing an outer portion width of the electrode group 10 to the size of the electrode group, a more compact rechargeable battery can be manufactured. Therefore, in the rechargeable battery 200 of the first embodiment, because spatial utility can be increased, it is advantageous for forming the rechargeable battery 200 to have high capacity and a compact size.

Further, the central case 40 that is formed with a laminate sheet does not have a bending portion. That is, instead of the central case 40, the positive electrode case 20 and the negative electrode case 30 have a bending portion (border portion of a linear portion and an inclined portion), and because the positive electrode case 20 and the negative electrode case 30 are formed with a hard metal in this embodiment, the bending portion does not have an influence on intensity of the cases.

Therefore, the central case 40 does not have a structural weakness due to deep drawing, and may have a thickness of 0.15mm to 1 mm, preferably 0.2mm to 0.5mm, more than a common laminate sheet. Therefore, the rechargeable battery 200 of the first embodiment can embody a thick battery having an entire thickness of 10mm or more, and can more securely protect the electrode group 10, and can minimize damage due to an external impact or vibration by increasing structural stability.

In FIGS. 1 and 2, the positive electrode terminal 21 and the negative electrode terminal 31 can have at least one opening 27 and 37. The openings 27 and 37 are to couple to a connection member (not shown), and the connection member is used when forming a battery module by coupling several rechargeable batteries 200 in series or in parallel.

In the above mentioned embodiment, a rechargeable battery is provided that comprises an electrode group including a central region including a positive electrode layer, a negative electrode layer, and a separator, the separator being located between the positive electrode and the negative electrode. The electrode group further includes a positive electrode portion extending from a first end of the central region and a negative electrode portion extending from a second end of the central region. A positive electrode case is provided that is arranged to surround the positive electrode portion of the electrode group. A negative electrode case is provided that is arranged to surround the negative electrode portion of the electrode group. A central case is provided that is arranged to surround the central region of the electrode group, with the central case being coupled between the positive electrode case and the negative electrode case.

As described above, the central case is arranged to surround a portion of at least one of the positive electrode case or the negative electrode case in some embodiments of the invention, and an overlapping portion of at least one of the positive electrode case or the negative electrode case is arranged to surround a portion of the central region of the electrode group. In particular, the central case is arranged to surround the overlapping portion of the positive electrode case and/or the negative electrode case. In some embodiments, there is a seal portion located between the overlapping portion of the positive electrode case and/or the negative electrode case and the central case. In other embodiments, there is a seal portion located between a portion of the positive electrode case and/or the negative electrode case that does not overlap with the central region and the central case.

In some embodiments, the positive electrode layer is coated with an active material in the central region and is uncoated in the positive electrode portion, and the negative electrode layer is coated with an active material in the central region and is uncoated in the negative electrode portion.

In some embodiments, at least one of the positive electrode portion of the negative electrode portion includes a curved portion and a current collecting portion connected to a respective positive electrode terminal portion or negative electrode terminal portion. In some embodiments, said at least one of the positive electrode case or the negative electrode case comprises a first receiving portion arranged to surround the respective curved portion of the positive electrode portion or the negative electrode portion, and a second receiving portion arranged to surround the current collecting portion of the respective positive electrode portion or the negative electrode portion. In some embodiments, the first receiving portion of the positive electrode case and/or the negative electrode case comprises a first portion adjacent the central region of the electrode group, and an inclined portion arranged to cover the curved portion of the respective electrode region, the included portion connecting the first receiving portion to the second receiving portion. In some embodiments, the second receiving portion of the positive electrode case and/or the negative electrode case comprises a space arranged to receive the current collecting portion of the respective electrode region.

In some embodiments, the current collecting portion of the positive electrode portion and/or the negative electrode portion is fixed to the respective positive electrode case or negative electrode case at a recess formed on the second receiving part of the respective positive electrode case or negative electrode case. In other embodiments, the current collecting portion of the positive electrode portion and/or the negative electrode portion is fastened to the respective positive electrode case or negative electrode case through an opening formed in the second receiving part of the respective positive electrode case or negative electrode case and a corresponding opening formed in the respective current collecting portion of the positive electrode portion or the negative electrode portion.

In some embodiments, the central case comprises a laminate sheet, and wherein the positive electrode case and/or the negative electrode case is formed from metal. In some embodiments, at least one of the positive electrode case or the negative electrode case acts as an electrode terminal for the rechargeable battery.

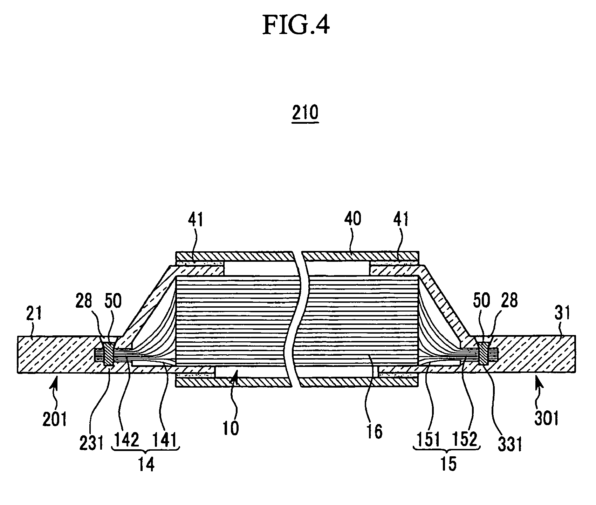

FIG. 4 is a cross-sectional view of a rechargeable battery according to a second embodiment of the present invention.

Referring to FIG. 4, a rechargeable battery 210 according to the second embodiment has a configuration similar to the rechargeable battery of the first embodiment, except for a structure of coupling an positive electrode current collecting portion 142 to a second receiving portion 231 of an positive electrode case 201 using a conductive fastening member 50 such as a rivet or a bolt instead of welding, and coupling a negative electrode current collecting portion 152 to a second receiving portion 331 of a negative electrode case 301. Like reference numerals designate like elements of the rechargeable battery of the first embodiment.

At least one of openings 28 and 38 that expose the positive electrode and negative electrode current collecting portions 142 and 152 are formed in the second receiving portions 231 and 331 of the positive electrode and negative electrode cases 201 and 301, respectively, and openings corresponding to the openings 28 and 38 of the second receiving portions 231 and 331 are also formed in the positive electrode and negative electrode current collecting portions 142 and 152, respectively. Thereby, the fastening members 50 fix the positive electrode and negative electrode current collecting portions 142 and 152 to the positive electrode and negative electrode cases 201 and 301 by penetrating through the second receiving portion 231 and the positive electrode current collecting portion 142, and penetrating through the second receiving portion 331 and the negative electrode current collecting portion 152, respectively.

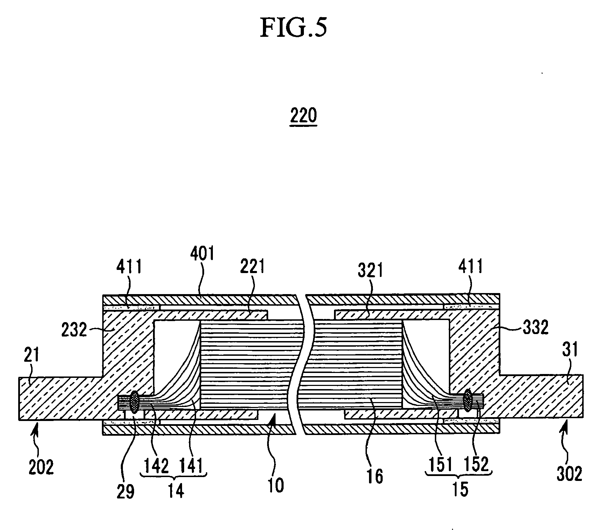

FIG. 5 is a cross-sectional view of a rechargeable battery according to a third embodiment of the present invention.

Referring to FIG. 5, a rechargeable battery 220 according to the third embodiment has a configuration similar to the rechargeable battery of the first embodiment, except that first receiving portions 221 and 321 of positive electrode and negative electrode cases 202 and 302 are formed in a rectangular parallelepiped shape in which both side surfaces of the first receiving portions 221 and 321 are opened without inclined portions, and second receiving portions 232 and 332 are formed to be orthogonal to the first receiving portions 221 and 321 at the outside of the first receiving portions 221 and 321. Like reference numerals designate like elements of the rechargeable battery of the first embodiment.

The first receiving portion 221 of the positive electrode case 202 encloses a part of a central portion 16 and an entire curve portion 141 of the electrode group 10, and the second receiving portion 232 thereof is formed orthogonal to the first receiving portion 221 and the positive electrode terminal 21. The second receiving portion 232 forms at least one opening 29 that exposes an positive electrode current collecting portion 142, and in the opening 29, the positive electrode current collecting portion 142 and the second receiving portion 232 are fixed by spot welding. The negative electrode case 302 is formed in the same shape as that of the positive electrode case 202 in this embodiment, though it may have a different shape to the positive electrode case in other embodiments.

A central case 401 encloses the entire central portion 16 of the electrode group 10 and the first and second receiving portions 221 and 232 of the positive electrode case 202, and the first and second receiving portions 321 and 332 of the negative electrode case 302, and is bonded by thermal bonding to the second receiving portions 232 and 332. In this case, a sealing portion 411 of the positive electrode and negative electrode cases 202 and 302 and the central case 401 is disposed at a corresponding position along a thickness direction of the electrode group 10 as the positive electrode and negative electrode current collecting portions 142 and.

In the rechargeable battery 220 according to the third embodiment, by increasing the thickness of the second receiving portions 232 and 332 and increasing an overlapping area of the central case 401 relative to the positive electrode case 202 and the negative electrode case 302, structural stability of the rechargeable battery 220 can be improved.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

## Claims

1. A rechargeable battery comprising:
an electrode group (10) including a central region (16) including a positive electrode layer (11), a negative electrode layer (12), and a separator (13), the separator being located between the positive electrode layer and the negative electrode layer, wherein the electrode group further includes a positive electrode portion (14) extending from a first end of the central region (16) and a negative electrode portion (15) extending from a second end of the central region;
**characterised by**;
a positive electrode case (20) formed from metal and arranged to surround and to be electrically connected to the positive electrode portion (14) of the electrode group;
a negative electrode case (30) formed from metal and arranged to surround and to be electrically connected to the negative electrode portion (15) of the electrode group; and
a central case (40) arranged to surround the central region of the electrode group, the central case (40) being coupled between the positive electrode case (20) and the negative electrode case (30).

2. A rechargeable battery according to Claim 1, wherein the central case (40) is arranged to surround a portion of at least one of the positive electrode case (20) or the negative electrode case (30).

3. A rechargeable battery according to Claim 1 or 2, wherein an overlapping portion of at least one of the positive electrode case (20) or the negative electrode case (30) is arranged to surround a portion of the central region (16) of the electrode group (10).

4. A rechargeable battery according to Claim 3, wherein the central case (40) is arranged to surround the overlapping portion of the positive electrode case (20) and/or the negative electrode case (30).

5. A rechargeable battery according to Claim 4, further comprising:
a seal portion located between the overlapping portion of the positive electrode case (20) and/or the negative electrode case (30) and the central case (40).

6. A rechargeable battery according to Claim 4, further comprising:
a seal portion located between a portion of the positive electrode case (20) and/or the negative electrode case (30) that does not overlap with the central region and the central case.

7. A rechargeable battery according to any one of Claims 1 to 6, wherein the positive electrode layer (11) is coated with an active material in the central region (16) and is uncoated in the positive electrode portion (14), and the negative electrode layer (12) is coated with an active material in the central region (16) and is uncoated in the negative electrode portion (15).

8. A rechargeable battery according to any one of Claims 1 to 7, wherein at least one of the positive electrode portion (14) or the negative electrode portion (15) includes a curved portion (141,151) and a current collecting portion (142,152) connected to a respective positive electrode terminal (21) or negative electrode terminal (31).

9. A rechargeable battery according to Claim 8, wherein said at least one of the positive electrode case (20) or the negative electrode case (30) comprises a first receiving portion (22,32) arranged to surround the respective curved portion (141, 151) of the positive electrode portion (14) or the negative electrode portion (15), and a second receiving portion (23,33) arranged to surround the current collecting portion (142,152) of the respective positive electrode portion (14) or the negative electrode portion (15).

10. A rechargeable battery according to Claim 9, wherein the first receiving portion (22,32) of the positive electrode case (20) and/or the negative electrode case (30) comprises a first portion (24,34) adjacent the central region (16) of the electrode group, and an inclined portion (25,35) arranged to cover the curved portion (141, 151) of the respective electrode region, the inclined portion (25,35) connecting the first receiving portion (22,32) to the second receiving portion (23,33).

11. A rechargeable battery according to Claim 9 or 10, wherein the second receiving portion (23,33) of the positive electrode case (20) and/or the negative electrode case (30) comprises a space arranged to receive the current collecting portion (142,152) of the respective electrode region.

12. A rechargeable battery according to Claim 11;
wherein the current collecting portion (142,152) of the positive electrode portion (14) and/or the negative electrode portion (15) is fixed to the respective positive electrode case (20) or negative electrode case (30) at a recess (26,36) formed on the second receiving portion (22,32) of the respective positive electrode case (20) or negative electrode case (30).

13. A rechargeable battery according to Claim 11;
wherein the current collecting portion (142,152) of the positive electrode portion (14) and/or the negative electrode portion (15) is fastened to the respective positive electrode case (20) or negative electrode case (30) through an opening (28,38) formed in the second receiving portion (23,33) of the respective positive electrode case (20) or negative electrode case (30) and a corresponding opening formed in the respective current collecting portion of the positive electrode portion (14) or the negative electrode portion (15).

14. A rechargeable battery according to any one of Claims 1 to 13, wherein the central case (40) comprises a laminate sheet.

15. A rechargeable battery according to any one of Claims 1 to 14, wherein at least one of the positive electrode case (20) or the negative electrode case (30) acts as an electrode terminal for the rechargeable battery.

## Patentansprüche

1. Wiederaufladbare Batterie, aufweisend:
eine Elektrodengruppe (10), aufweisend einen mittleren Bereich (16), der eine positive Elektrodenschicht (11), eine negative Elektrodenschicht (12) und einen Separator (13) aufweist, wobei der Separator zwischen der positiven Elektrodenschicht und der negativen Elektrodenschicht angeordnet ist, wobei die Elektrodengruppe ferner einen positiven Elektrodenabschnitt (14), der sich von einem ersten Ende des mittleren Bereichs (16) erstreckt, und einen negativen Elektrodenabschnitt (15), der sich von einem zweiten Ende des mittleren Bereichs erstreckt, aufweist;
**gekennzeichnet durch**:
ein positives Elektrodengehäuse (20), das aus Metall ausgebildet ist und angeordnet ist, um den positiven Elektrodenabschnitt (14) der Elektrodengruppe zu umgeben und elektrisch mit diesem verbunden zu sein;
ein negatives Elektrodengehäuse (30), das aus Metall ausgebildet ist und angeordnet ist, um den negativen Elektrodenabschnitt (15) der Elektrodengruppe zu umgeben und elektrisch mit diesem verbunden zu sein; und
ein mittleres Gehäuse (40), das angeordnet ist, um den mittleren Bereich der Elektrodengruppe zu umgeben, wobei das mittlere Gehäuse (40) zwischen das positive Elektrodengehäuse (20) und das negative Elektrodengehäuse (30) gekoppelt ist.

2. Wiederaufladbare Batterie nach Anspruch 1, wobei das mittlere Gehäuse (40) angeordnet ist, um einen Abschnitt von zumindest einem des positiven Elektrodengehäuses (20) oder des negativen Elektrodengehäuses (30) zu umgeben.

3. Wiederaufladbare Batterie nach Anspruch 1 oder 2, wobei ein überlappender Abschnitt von zumindest einem des positiven Elektrodengehäuses (20) oder des negativen Elektrodengehäuses (30) angeordnet ist, um einen Abschnitt des mittleren Bereichs (16) der Elektrodengruppe (10) zu umgeben.

4. Wiederaufladbare Batterie nach Anspruch 3, wobei das mittlere Gehäuse (40) angeordnet ist, um den überlappenden Abschnitt des positiven Elektrodengehäuses (20) und/oder des negativen Elektrodengehäuses (30) zu umgeben.

5. Wiederaufladbare Batterie nach Anspruch 4, weiterhin aufweisend:
einen Dichtungsabschnitt, der zwischen dem überlappenden Abschnitt des positiven Elektrodengehäuses (20) und/oder des negativen Elektrodengehäuses (30) und dem mittleren Gehäuse (40) angeordnet ist.

6. Wiederaufladbare Batterie nach Anspruch 4, weiterhin aufweisend:
einen Dichtungsabschnitt, der zwischen einem Abschnitt des positiven Elektrodengehäuses (20) und/oder des negativen Elektrodengehäuses (30), der nicht mit dem mittleren Bereich und dem mittleren Gehäuse überlappt, angeordnet ist.

7. Wiederaufladbare Batterie nach einem der Ansprüche 1 bis 6, wobei die positive Elektrodenschicht (11) im mittleren Bereich (16) mit einem aktiven Material beschichtet ist und im positiven Elektrodenabschnitt (14) unbeschichtet ist, und wobei die negative Elektrodenschicht (12) im mittleren Bereich (16) mit einem aktiven Material beschichtet ist und im negativen Elektrodenabschnitt (15) unbeschichtet ist.

8. Wiederaufladbare Batterie nach einem der Ansprüche 1 bis 7, wobei zumindest einer des positiven Elektrodenabschnitts (14) oder des negativen Elektrodenabschnitts (15) einen gekrümmten Abschnitt (141, 151) und einen Stromsammelabschnitt (142, 152), die mit einem jeweiligen positiven Elektrodenanschluss (21) oder negativen Elektrodenanschluss (31) verbunden sind, aufweist.

9. Wiederaufladbare Batterie nach Anspruch 8, wobei das besagte zumindest eine des positiven Elektrodengehäuses (20) oder des negativen Elektrodengehäuses (30) einen ersten Aufnahmeabschnitt (22, 32), der angeordnet ist, um den jeweiligen gekrümmten Abschnitt (141, 151) des positiven Elektrodenabschnitts (14) oder des negativen Elektrodenabschnitts (15) zu umgeben, und einen zweiten Aufnahmeabschnitt (23, 33), der angeordnet ist, um den Stromsammelabschnitt (142, 152) des jeweiligen positiven Elektrodenabschnitts (14) oder des negativen Elektrodenabschnitts (15) zu umgeben, aufweist.

10. Wiederaufladbare Batterie nach Anspruch 9, wobei der erste Aufnahmeabschnitt (22, 32) des positiven Elektrodengehäuses (20) und/oder des negativen Elektrodengehäuses (30) einen ersten Abschnitt (24, 34) benachbart zum mittleren Bereich (16) der Elektrodengruppe und einen geneigten Abschnitt (25, 35), der angeordnet ist, um den gekrümmten Abschnitt (141, 151) des jeweiligen Elektrodenbereichs zu bedecken, aufweist, wobei der geneigte Abschnitt (25, 35) den ersten Aufnahmeabschnitt (22, 32) mit dem zweiten Aufnahmeabschnitt (23, 33) verbindet.

11. Wiederaufladbare Batterie nach Anspruch 9 oder 10, wobei der zweite Aufnahmeabschnitt (23, 33) des positiven Elektrodengehäuses (20) und/oder des negativen Elektrodengehäuses (30) einen Zwischenraum, der angeordnet ist, um den Stromsammelabschnitt (142, 152) des jeweiligen Elektrodenbereichs aufzunehmen, aufweist.

12. Wiederaufladbare Batterie nach Anspruch 11,
wobei der Stromsammelabschnitt (142, 152) des positiven Elektrodenabschnitts (14) und/oder des negativen Elektrodenabschnitts (15) am jeweiligen positiven Elektrodengehäuse (20) oder negativen Elektrodengehäuse (30) an einer Ausnehmung (26, 36), die auf dem zweiten Aufnahmeabschnitt (22, 32) des jeweiligen positiven Elektrodengehäuses (20) oder negativen Elektrodengehäuses (30) ausgebildet ist, befestigt ist.

13. Wiederaufladbare Batterie nach Anspruch 11,
wobei der Stromsammelabschnitt (142, 152) des positiven Elektrodenabschnitts (14) und/oder des negativen Elektrodenabschnitts (15) durch eine Öffnung (28, 38), die im zweiten Aufnahmeabschnitt (23, 33) des jeweiligen positiven Elektrodengehäuses (20) oder negativen Elektrodengehäuses (30) ausgebildet ist, und eine korrespondierende Öffnung, die im jeweiligen Stromsammelabschnitt des positiven Elektrodenabschnitts (14) oder des negativen Elektrodenabschnitts (15) ausgebildet ist, mit dem jeweiligen positiven Elektrodengehäuse (20) oder negativen Elektrodengehäuse (30) befestigt ist.

14. Wiederaufladbare Batterie nach einem der Ansprüche 1 bis 13, wobei das mittlere Gehäuse (40) eine Verbundfolie aufweist.

15. Wiederaufladbare Batterie nach einem der Ansprüche 1 bis 14, wobei zumindest eines des positiven Elektrodengehäuses (20) oder des negativen Elektrodengehäuses (30) als Elektrodenanschluss für die wiederaufladbare Batterie fungiert.

## Revendications

1. Batterie rechargeable comprenant:
un groupe d'électrodes (10) comportant une région centrale (16) comportant une couche d'électrode positive (11), une couche d'électrode négative (12) et un séparateur (13), le séparateur étant situé entre la couche d'électrode positive et la couche d'électrode négative, dans lequel le groupe d'électrodes comporte en outre une partie d'électrode positive (14) s'étendant depuis une première extrémité de la région centrale (16) et une partie d'électrode négative (15) s'étendant depuis une seconde extrémité de la région centrale;
**caractérisée par**:
un boîtier d'électrode positive (20) formé de métal et agencé de manière à entourer et à être électriquement connecté à la partie d'électrode positive (14) du groupe d'électrodes;
un boîtier d'électrode négative (30) formé de métal et agencé de manière à entourer et à être électriquement connecté à la partie d'électrode négative (15) du groupe d'électrodes; et
un boîtier central (40) agencé de façon à entourer la région centrale du groupe d'électrodes, le boîtier central (40) étant relié entre le boîtier d'électrode positive (20) et le boîtier d'électrode négative (30).

2. Batterie rechargeable selon la revendication 1, dans laquelle le boîtier central (40) est agencé de manière à entourer une partie d'au moins l'un du boîtier d'électrode positive (20) ou du boîtier d'électrode négative (30).

3. Batterie rechargeable selon la revendication 1 ou 2, dans laquelle une partie de chevauchement d'au moins l'un du boîtier d'électrode positive (20) ou du boîtier d'électrode négative (30) est agencée de façon à entourer une partie de la région centrale (16) du groupe d'électrodes (10).

4. Batterie rechargeable selon la revendication 3, dans laquelle le boîtier central (40) est agencé de façon à entourer la partie de chevauchement du boîtier d'électrode positive (20) et/ou du boîtier d'électrode négative (30).

5. Batterie rechargeable selon la revendication 4, comprenant en outre :
une partie formant joint d'étanchéité située entre la partie de chevauchement du boîtier d'électrode positive (20) et/ou du boîtier d'électrode négative (30) et le boîtier central (40).

6. Batterie rechargeable selon la revendication 4, comprenant en outre:
une partie formant joint d'étanchéité située entre une partie du boîtier d'électrode positive (20) et/ou du boîtier d'électrode négative (30) qui ne chevauche pas la région centrale et le boîtier central.

7. Batterie rechargeable selon l'une quelconque des revendications 1 à 6, dans laquelle la couche d'électrode positive (11) est revêtue d'un matériau actif dans la région centrale (16) et n'est pas revêtue dans la partie d'électrode positive (14), et la couche d'électrode négative (12) est revêtue d'un matériau actif dans la région centrale (16) et n'est pas revêtue dans la partie d'électrode négative (15).

8. Batterie rechargeable selon l'une quelconque des revendications 1 à 7, dans laquelle au moins l'une de la partie d'électrode positive (14) ou de la partie d'électrode négative (15) comporte une partie incurvée (141, 151) et une partie collectrice de courant (142, 152) respectivement connectées à une borne d'électrode positive (21) ou à une borne d'électrode négative (31).

9. Batterie rechargeable selon la revendication 8, dans laquelle ledit au moins un du boîtier d'électrode positive (20) ou du boîtier d'électrode négative (30) comprend une première partie réceptrice (22, 32) agencée de façon à entourer la partie incurvée respective (141, 151) de la partie d'électrode positive (14) ou de la partie d'électrode négative (15), et une seconde partie réceptrice (23, 33) agencée de façon à entourer respectivement la partie collectrice de courant (142, 152) de la partie d'électrode positive (14) ou de la partie d'électrode négative (15).

10. Batterie rechargeable selon la revendication 9, dans laquelle la première partie réceptrice (22, 32) du boîtier d'électrode positive (20) et/ou du boîtier d'électrode négative (30) comprend une première partie (24, 34) adjacente à la région centrale (16) du groupe d'électrodes, et une partie inclinée (25, 35) agencée de façon à recouvrir la partie incurvée (141, 151) de la région d'électrode respective, la partie inclinée (25, 35) connectant la première partie réceptrice (22, 32) à la seconde partie réceptrice (23, 33).

11. Batterie rechargeable selon la revendication 9 ou 10, dans laquelle la seconde partie réceptrice (23, 33) du boîtier d'électrode positive (20) et/ou du boîtier d'électrode négative (30) comprend un espace agencé pour recevoir la partie collectrice de courant (142, 152) de la région d'électrode respective.

12. Batterie rechargeable selon la revendication 11,
dans laquelle la partie collectrice de courant (142, 152) de la partie d'électrode positive (14) et/ou de la partie d'électrode négative (15) est respectivement fixée au boîtier d'électrode positive (20) ou au boîtier d'électrode négative (30) au niveau d'un évidement (26, 36) respectivement formé sur la seconde partie réceptrice (22, 32) du boîtier d'électrode positive (20) ou du boîtier d'électrode négative (30).

13. Batterie rechargeable selon la revendication 11,
dans laquelle la partie collectrice de courant (142, 152) de la partie d'électrode positive (14) et/ou de la partie d'électrode négative (15) est respectivement fixée au boîtier d'électrode positive (20) ou au boîtier d'électrode négative (30) à travers une ouverture (28, 38) ménagée dans la seconde partie réceptrice (23, 33) du boîtier d'électrode positive (20) ou du boîtier d'électrode négative (30) et à travers une ouverture correspondante respectivement ménagée dans la partie collectrice de courant respective de la partie d'électrode positive (14) ou de la partie d'électrode négative (15).

14. Batterie rechargeable selon l'une quelconque des revendications 1 à 13, dans laquelle le boîtier central (40) comprend une feuille stratifiée.

15. Batterie rechargeable selon l'une quelconque des revendications 1 à 14, dans laquelle au moins l'un du boîtier d'électrode positive (20) ou du boîtier d'électrode négative (30) sert de borne d'électrode pour la batterie rechargeable.
